Europäisches Patentamt

European Patent Office

Office européen des brevets

(19)

(11) Publication number: **0 057 420**
**B1**

(12) **EUROPEAN PATENT SPECIFICATION**

(45) Date of publication of patent specification: 07.05.86

(21) Application number: **82100555.0**

(22) Date of filing: **01.02.82**

(51) Int. Cl.⁴: **C 08 F 10/02,** C 08 F 4/64,
C 08 F 4/02

(54) Process for producing ethylene polymers.

(30) Priority: 30.01.81 JP 14036/81
30.01.81 JP 14037/81

(43) Date of publication of application:
11.08.82 Bulletin 82/32

(45) Publication of the grant of the patent:
07.05.86 Bulletin 86/19

(84) Designated Contracting States:
BE DE FR IT NL

(56) References cited:
FR-A-1 552 522
FR-A-2 091 602
FR-A-2 320 311
FR-A-2 394 557

(73) Proprietor: SUMITOMO CHEMICAL COMPANY,
LIMITED
15 Kitahama 5-chome Higashi-ku
Osaka-shi Osaka 541 (JP)

(72) Inventor: Kawai, Kiyoshi
6-1-738, Hojocho-4-chome
Toyonaka-shi (JP)
Inventor: Mashita, Kentaro
9-3, Aobadai-4-chome
Ichihara-shi (JP)
Inventor: Hanji, Katsumi
2-1, Kuwatacho
Ibaraki-shi (JP)
Inventor: Takao, Hiroshi
1-57-5, Higashiota-4-chome
Ibaraki-shi (JP)

(74) Representative: Vossius Vossius Tauchner
Heunemann Rauh
Siebertstrasse 4 P.O. Box 86 07 67
D-8000 München 86 (DE)

# 0 057 420

## Description

This invention relates to a process for producing an ethylene polymer or an ethylene-olefin copolymer [briefly "ethylene polymer(s)"] having a broad molecular weight distribution, good melt flowability, and desirable uniformity with very little incompatible or heterogeneous particle content.

Ethylene polymers are required to be of broad molecular weight distribution for the purpose of producing films, pipes, bottles, cables, or the like by extrusion or blow molding, because those having a narrow molecular weight distribution are insufficient in melt flowability, leading to a large power consumption in extrusion, and decreased commercial value of the product owing to the occurrence of melt fracture on the surface, which impairs the appearance of the product.

There are known various methods to broaden the molecular weight distribution. Attempts have heretofore been made to achieve the object by proper selection of the catalyst. However, the degree of broadening of the molecular weight distribution caused by the non-uniform distribution of the active sites on a catalyst is rather small, whereas if it is intended to achieve a large degree of broadening, the catalyst activity frequently tends to become lower, that is, the high activity of a catalyst is sacrificed. When a catalyst of low activity is used, it becomes necessary to remove the residual catalyst by washing the polymer, rendering the process uneconomical. Another means to broaden the molecular weight distribution is to blend an ethylene polymer of high molecular weight with that of low molecular weight either mechanically or in solutions. However, the mechanical blending presents a problem of non-uniformity of the blend, which is untolerably deleterious to the light gauge products such as film, pipe and bottle, while the solution blending requires an expensive mixing procedure, rendering the process uneconomical, though the problem of uniformity can be solved.

Further, there are known several methods of broadening the molecular weight distribution of an ethylene polymer by carrying out the polymerization in multiple stages using different hydrogen concentration in each stage. However, various difficulties are encountered in practicing the continuous multistage production of an ethylene polymer of broad molecular weight distribution on an industrial scale and it was found difficult to produce economically a polymer having satisfactory properties. The difficult problems encountered in the continuous multistage polymerization and the means to solve the problems are described below.

In the multistage polymerization (hereinafter description is limited to the case of two-stage polymerization which is typical of the multistage polymerization) using different hydrogen concentration in each stage, there are two methods of operation which are different from each other in the sequence of polymerization at low and high hydrogen concentrations. In the one method (method A) the first stage polymerization is conducted at lower hydrogen concentration and the second stage polymerization at higher hydrogen concentration, while in the other (method B) the first stage polymerization is conducted at higher hydrogen concentration and the second stage polymerization at lower hydrogen concentration. In the method B, because of the high hydrogen concentration in the first stage, it is generally necessary to interpose a step for removing the unreacted gas between the first and second reaction zones. For this reason and in view of the nature of slurry, the method A would be preferred. On the other hand, however, a conventional high-activity supported-type Ziegler catalyst tends generally to reduce its activity rather rapidly with the progress of reaction and the rate of polymerization decreases when the hydrogen concentration is increased. Accordingly, in the method A the rate of polymerization is very high in the first stage where the catalyst activity is high and the hydrogen concentration is low, whereas the rate of polymerization becomes very low in the second stage where the catalyst activity has become decreased and the hydrogen concentration is kept high. As a consequence, it becomes necessary to change the residence time of the polymerization mixture in the second stage greatly from that in the first stage. This means that the capacity of both reactors should differ markedly from each other, resulting in great difficulties in the control as well as steadiness of the continuous operation. In addition, because of a high rate of polymerization in the first stage, the removal of polymerization heat presents a difficult problem.

This invention is predicated upon the discovery that the above-said difficulties encountered in carrying out the multistage polymerization by the method A may be overcome by using a supported-type Ziegler catalyst having a high activity persisting for a long period of polymerization and setting the average production of polymer per unit amount of solid catalyst component within a specific range.

An object of this invention is to provide a process for producing an ethylene polymer having a broad molecular weight distribution and excellent in uniformity and melt flowability.

Other objects and advantages of this invention will become apparent from the following description.

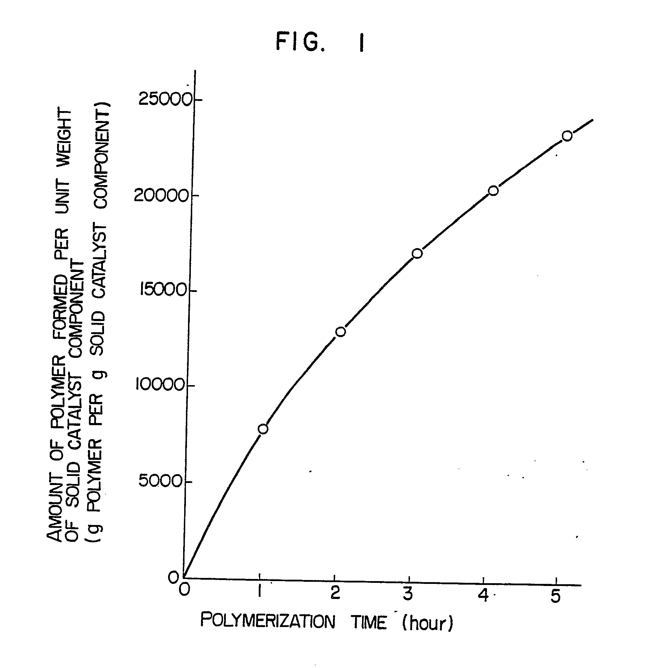

The accompanying drawings are representation of the relationships between the polymerization time and the amount of polymer formation per unit quantity of the solid catalyst component. Figures 1, 2, 3 and 4 pertain to the results of tests for the persistence of polymerization activity obtained in Examples 1-(2), 2-(1), 3-(2), and 4-(1), respectively.

According to this invention, there is provided an improved process for producing an ethylene polymer having a broad molecular weight distribution by the slurry-type polymerization of ethylene or ethylene and other olefins in two or more reaction zones connected in series and kept full with the liquid phase to substantially exclude the gas phase using a catalyst system comprising a high-activity supported-type

2

# 0 057 420

Ziegler catalyst component (briefly "solid catalyst component") and an organometallic compound component and hydrogen as molecular weight regulator, wherein the improvement which comprises;

(i) using (a) a solid catalyst component satisfying the formula

$$t_2/t_1<2,$$

(where $t_1$ and $t_2$ are the time required to produce an ethylene polymer amounting to respectively 30,000 and 40,000 times the weight of solid catalyst component in a polymerization test performed under the same conditions as in the first stage reaction zone of multistage polymerization) for obtaining the ethylene polymer having a density below 0.945 g/cm$^3$, or (b) a solid catalyst component satisfying the formula

$$t_2/t_1<2$$

(where $t_1$ and $t_2$ are the time required to produce an ethylene polymer amounting to respectively 15,000 and 20,000 times the weight of solid catalyst component in a polymerization test performed under the same conditions as in the first stage reaction zone of multistage polymerization) for obtaining the ethylene polymer having a density of 0.945 g/cm$^3$ or above;

(ii) feeding the catalyst system continuously to the first stage reaction zone, allowing the polymerization to proceed under application of pressure in the presence or absence of hydrogen to produce higher molecular-weight polymer particles, withdrawing continuously the resulting polymer slurry, transferring the slurry to the second stage reaction zone where the polymerization is further continued under the conditions of hydrogen-to-ethylene ratio larger than that in the first stage reaction zone to produce a polymer having a molecular weight lower than that of the polymer formed in the first stage; if necessary, continuing the polymerization in a similar manner in the third and following stages;

(iii) keeping the average amount of polymer produced in each stage, except for the final stage, (a) below 30,000 times the weight of solid catalyst component for obtaining a polymer having a density below 0.945 g/cm$^3$, or (b) at or below 15,000 times the weight of solid catalyst component for obtaining a polymer having a density of 0.945 g/cm$^3$ or above; and

(iv) selecting the amount of polymer formation in each stage so as to keep the average amount of polymer produced after completion of the multistage polymerization at 5,000 times the weight of solid catalyst component or more.

In producing an ethylene polymer having a density below 0.945 g/cm$^3$, the solid catalyst component for use in the present invention should show a polymer producing ability of 40,000-fold or more (in terms of weight of polymer per unit weight of the solid catalyst component) and retain sufficient residual activity after the amount of polymer has reached 30,000 times the weight of solid catalyst component. In case the density of polymer is 0.945 g/cm$^3$ or above, the solid catalyst component should show an ability of 20,000-fold polymer production or more and retain sufficient residual activity after the 15,000-fold polymer production. To describe more fully, when tested under the same polymerization conditions as those in the first reaction zone of multistage polymerization, the catalyst should satisfy a relationship represented by the formula

$$\frac{t_2}{t_1}<2\ldots\ldots \text{ formula (a)}$$

(where $t_1$ is the time required for the 30,000-fold polymer production and $t_2$ is the time required for 40,000-fold polymer production) for obtaining the polymer having a density below 0.945 g/cm$^3$, while the catalyst satisfies a relationship represented by the formula

$$\frac{t_2}{t_1}<2\ldots\ldots \text{ formula (a)}$$

(where $t_1$ is the time required for the 15,000-fold polymer production and $t_2$ is the time required for the 20,000-fold polymer production) for obtaining the polymer having a density of 0.945 g/cm$^3$ or above. The ratio $t_2/t_1$ in the formulas (a) should be less than 2, preferably less than 1.7. If the multistage polymerization is carried out by use of a catalyst which shows the ratio of 2 or more, the rates of polymerization in the second and succeeding stages become markedly lower than that in the first stage, resulting in disturbance of the smooth operation and decline in productivity owing to too much difference in residence time between the first stage and the succeeding stages, even though the adjustment of residence time is possible to some extent by the selection of polymerization conditions. Although the rate of polymerization in the second and following stages may be increased by an additional feeding of the solid catalyst component, yet the amount of such an additional feed is limited to a certain range, because with the increase in the additional feed, there will arise such difficulties as a decline in uniformity of the polymer, leading to a defect in molded products such as fish-eye or unevenness.

Important one of the conditions necessary for the present process is the use of a solid catalyst component having a long-lasting activity which meets the above requirement. If the multistage polymerization is carried out by use of a solid catalyst component which does not meet the requirement, it is difficult to obtain a product of good quality with a desirable economic efficiency.

According to this invention, for obtaining the ethylene polymer having a density below 0.945 g/cm$^3$, the average polymer production by weight in each stage, except for the last stage, should be restricted to 30,000 times or less the weight of solid catalyst component, and the polymer production in each stage is selected so that the average yield of the final polymer may become 5,000 times or more the weight of solid catalyst component after completion of the multistage polymerization. For obtaining the ethylene polymer having a density of 0.945 g/cm$^3$ or above, the average polymer production by weight in each stage, except for the last stage, should be restricted to 15,000 times or less the weight of solid catalyst component, and the polymer production in each stage is selected so that the average yield of the final polymer may become 5,000 times or more the weight of solid catalyst component after completion of the multistage polymerization. If the average polymer production in any stage excepting the final stage is 30,000-fold or more in the case of an ethylene polymer having a density below 0.945 g/cm$^3$, or if it is 15,000-fold or more in the case of an ethylene polymer having a density of 0.945 g/cm$^3$ or above, the polymerization activity of a catalyst in the succeeding stages will decrease and it becomes difficult to adjust the residence time in each stage so as to keep the productivity favorable. Further, if the average yield of polymer after completion of the multistage polymerization is less than 5,000 times the weight of solid catalyst component, a step of catalyst removal will become necessary to decrease the ash content of the polymer, resulting in a decrease in economic efficiency of the process.

The effective carriers for the solid catalyst components used in the present process include oxides, hydroxides, chlorides, carbonates of metals and silicon, and mixtures of these compounds such as, for example, magnesium oxide, titanium oxide, silica, alumina, magnesium carbonate, hydroxychlorides of divalent metals, magnesium hydroxide, magnesium chloride, magnesium alkoxides, magnesium haloalkoxides, double oxides of magnesium and aluminum, and double oxides of magnesium and calcium. Of these, magnesium compounds are especially preferred.

Examples of the transition metal compounds being supported on the carriers include titanium compounds, vanadium compounds and zirconium compounds such as titanium tetrachloride, titanium tetrabromide, titanium tetraiodide, titanium trichloride; titanium compounds represented by the general formula $Ti(OR^1)_{4-p}X_p$ (where $R^1$ represents a hydrocarbon group, X represents a halogen atom, and p is a number defined by the formula $0 \leqq p < 4$) such as alkoxytitanium compounds, aryloxytitanium compounds, alkoxytitanium halides, and aryloxytitanium halides; vanadium tetrachloride, vanadium oxytrichloride, zirconium tetrachloride, and zirconium compounds represented by the general formula $Zr(OR^2)_{4-q}X_q$ (where $R^2$ represents a hydrocarbon group, X represents a halogen atom, and q is a number defined by the formula $0 \leqq q < 4$) such as alkoxyzirconium compounds, aryloxyzirconium compounds, alkoxyzirconium halides, and aryloxyzirconium halides. The reaction products of organomagnesium compounds and transition metal compounds represented by the general formula $Ti(OR^3)_{4-r}X_r$ (where $R^3$ represents a hydrocarbon group, X represents a halogen atom, and r is a number defined by the formula $0 \leqq r \leqq 4$) such as titanium tetrahalides, alkoxytitanium compounds, aryloxytitanium compounds, alkoxytitanium halides, and aryloxytitanium halides are also used as the solid catalyst component. Examples of suitable solid catalyst components are described in Japanese Patent Publication Nos. 39,037/79, 40,273/79, 40,274/79, 23,561/80; Japanese Patent Application "Kokai" (Laid-open) Nos. 126,785/75, 84,884/76, 144,006/80; Japanese Patent Application Nos. 165,341/79, 9,200/80; U.S. Patent 4,223,117.

The organometallic compounds which form the catalyst systems in polymerization reaction together with the above solid catalyst components include trialkylaluminums such as triethylaluminum, tri-n-propylaluminum, triisobutylaluminum, tri-n-butylaluminum, and tri-n-hexylaluminum; dialkylaluminum mono-halides such as diethylaluminum monochloride, di-n-propylaluminum monochloride, diisobutylaluminum monochloride, di-n-butylaluminum monochloride, and di-n-hexylaluminum monochloride; alkylaluminum dihalides such as ethylaluminum dichloride, n-propylaluminum dichloride, isobutylaluminum dichloride, n-butylaluminum dichloride, and n-hexylaluminum dichloride; other organoaluminum compounds such as ethylaluminum sesquichloride, n-propylaluminum sesquichloride, isobutylaluminum sesquichloride, n-butylaluminum sesquichloride, and n-hexylaluminum sesquichloride; other organometallic compounds of zinc and others. These organometallic compounds are used each alone or in mixtures.

In the present multistage polymerization process, a desired amount of an ethylene polymer of a desired molecular weight (or of an intrinsic viscosity) is produced in each stage. The molecular weight and the amount of polymer in each stage are determinable by taking into account the processability of the polymer and the physical properties of the molded product.

In the first stage reaction zone, a polymer having an intrinsic viscosity of 2 to 10 dl/g (at 135°C in tetralin) is produced in the absence of hydrogen or under the conditions of a relatively small hydrogen-to-ethylene ratio. If the intrinsic viscosity falls outside the above range, the melt flowability of the final polymer will be unsatisfactory. The amount of polymer formed in the first stage reaction zone is 5 to

4

80% by weight of the total polymer. If the amount of polymer is beyond the above limits, the melt flowability of the final polymer and the physical properties of the molded product are both unsatisfactory. In the second stage reaction zone, a polymer having an intrinsic viscosity of 0.2 to 1.5 dl/g is produced under the conditions of a higher hydrogen-to-ethylene ratio than that in the first stage reaction zone. If the intrinsic viscosity is higher than 1.5 dl/g, the melt flowability of the final polymer becomes unsatisfactory, while if it is below 0.2 dl/g, the polymerization activity is undesirably reduced.

In producing a copolymer of ethylene and other olefins by the present process, the amount of an olefin in the copolymer in each stage can be determined as desired by selecting the ratio of ethylene to other olefins.

The multistage polymerization according to this invention permits the production of an ethylene polymer which is uniform and has a desired molecular weight, broad molecular weight distribution, and excellent melt flowability.

When it is required to add an additional amount of the solid catalyst component to the second or subsequent stage reaction zones, it is desirable to employ a least possible amount in order to keep the polymer free from the defect such as fish-eye or unevenness. Although the limit of the allowable amount of additional solid catalyst component varies depending upon the amount of polymer produced in each stage and the molecular weight, it is generally desirable to keep the additional amount from exceeding 50% by weight of the amount fed to the first stage reaction zone.

In the present process, each reaction zone is kept substantially free from the gas phase by filling the space entirely with the liquid phase. If the gas phase is present in the reaction zone, a polymer build-up on the wall will take place and tends to cause fish-eye or unevenness to appear in the molded product.

For the polymerization, may be used any of the loop-type, tube-type, and vessel-type reactors. Of these reactors, the loop-type is most suitable for the operation in each stage of the reaction.

It is also possible to carry out the present process in such manner that the first stage reactor is operated under a pressure higher than that in the second stage reactor and the polymer slurry is transferred by utilizing the pressure difference.

The present process may be carried out by using, for example, two reactors connected in series. The first stage polymerization is carried out by feeding continuously to the first reactor prescribed amounts of catalyst, solvent, ethylene, and, if necessary, other olefins and hydrogen. The polymer slurry is transferred from the first reactor continuously to the second reactor, while feeding continuously to the second reactor prescribed amounts of the solvent, hydrogen, ethylene, and, if necessary, other olefins to carry out the second stage polymerization. If the third and succeeding stage polymerization are to be performed, the operation is similar to that in the second reactor. In each stage, it is also possible to employ multiple reactors connected in series or parallel, which operate under substantially the same polymerization conditions.

The present process is adaptable to the homopolymerization of ethylene as well as to the copolymerization of ethylene with other olefins. Examples of olefins used as comonomers are α-olefins such as propylene, butene-1, pentene-1, hexene-1, octene-1, and 4-methylpentene-1. The amount of olefins to be copolymerized with ethylene is 15 mole % or less, preferably 10 mole % or less, most preferably 5 mole % or less.

The density of polymer can be easily adjusted mainly by controlling the amount of olefins to be copolymerized with ethylene and the molecular weight of the polymer to be produced.

According to the present process, it is possible to obtain a polymer having desirable physical properties and processability on a large scale with favorable economic efficiency by changing the average molecular weight, molecular weight distribution, and density of the polymer as desired. Since the ethylene polymer produced by the process of this invention has broad molecular weight distribution and excellent melt flowability and can be processed into molded products of sufficient uniformity with little fish-eye or unevenness, it is particularly suitable for the extrusion molding or blow molding of films, pipes, bottles and cables.

The polymerization temperature in the present process ranges from room temperature to 120°C, preferably from 50° to 100°C. The polymerization pressure is from atmospheric pressure to 100 kg/cm², preferably from 5 to 50 kg/cm².

The inert solvents used as polymerization solvents include aliphatic hydrocarbons such as propane, butane, pentane, hexane, heptane and octane; alicyclic hydrocarbons such as cyclohexane and cycloheptane; and aromatic hydrocarbons such as benzene, toluene and xylene. Of these hydrocarbons, particularly preferred are aliphatic hydrocarbons. When α-olefins of 3 to 8 carbon atoms such as propylene, butene-1 and pentene-1 are used as the comonomer, it is possible to carry out the liquid-phase bulk copolymerization by utilizing the comonomer itself as the solvent. As compared with the common slurry obtained by using a liquid saturated hydrocarbon of 6 or 7 carbon atoms as solvent, the slurry formed by using a low-boiling saturated hydrocarbon such as propane, butane or pentane has an advantage in that the polymer can be separated by a simple means of flashing. Moreover, in the case of polymerization in such a low-boiling saturated hydrocarbon, the resulting polymer contains smaller amount of polymer soluble in the low-boiling saturated hydrocarbon and, hence, there are no such troubles as the viscosity increase in the reactor, stickiness and adhesion of polymer cake, which troubles are caused by the

# 0 057 420

formation of low-molecular weight soluble polymer; the nature of polymer particles is better and the production efficiency per unit volume of the reactor is higher.

A sufficient concentration of the solid catalyst component in the polymerization system of the first and second stages is generally 0.001 to 0.1 mmole (in terms of transition metal atom) per liter of the solvent. The amount to be used of an organometallic compound component is not critical, but it is used generally in an amount of 0.5 to 500, preferably 2 to 100 mole equivalent per mole of the transition metal atom in the solid catalyst component. The catalyst is fed conveniently by utilizing an inert solvent as the carrier. The inert solvents suitable for the purpose include aliphatic hydrocarbons such as propane, butane, pentane, hexane, heptane and octane.

The invention is further illustrated below in detail with reference to Examples, but the invention is not limited unless it departs from the essential feature of the invention. In Examples, the properties of the polymer were determined in the following way:

The density and the bulk density were determined in accordance with JIS K 6760 and JIS K 6721, respectively.

The melt flowability was expressed in terms of "melt flow ratio" (MFR) which, as herein used, is defined as the ratio of the flow rate under a load of 21.60 kg to the flow rate (i.e. melt index) under a load of 2.160 kg, both flow rates being determined in accordance with ASTM D 1238-57T at 190°C.

$$MFR = \frac{\text{Flow rate under a load of 21.60 kg}}{\text{Flow rate under a load of 2.160 kg}}$$

## Example 1

### (1) Preparation of solid catalyst component.

Into a 50-liter autoclave provided with a stirrer, was charged 2.0 kg of magnesium turnings for Grignard reagent. The autoclave was freed from the air and moisture by thorough flashing with nitrogen. To the autoclave were added dropwise at 50°C 8.0 liters of n-butyl chloride and 25 liters of n-butyl ether over a period of 4 hours. After completion of the dropwise addition, the reaction was allowed to continue at 60°C for one hour. The reaction mixture was then cooled to room temperature and the unreacted magnesium was removed by filtration. The concentration of n-butylmagnesium chloride in the n-butyl ether was found to be 2.06 moles/liter, as determined by hydrolysis with 1$N$ sulfuric acid and back titration with 1$N$ sodium hydroxide solution with phenolphthalein as indicator. A 50-liter autoclave, which had been thoroughly flashed with nitrogen to remove the air and moisture, was charged with 30 liters (62 moles) of the above n-butyl ether solution containing n-butylmagnesium chloride. To the autoclave, was added dropwise at 30°C 7.0 liters (62 moles) of silicon tetrachloride over a period of 2 hours. After completion of the addition, the reaction was allowed to continue for one hour at 30°C. The solid product was washed with n-heptane and allowed to react with 20 liters of titanium tetrachloride at 100°C for one hour with stirring. After completion of the reaction, the resulting solid was washed repeatedly with n-heptane until no more titanium tetrachloride had been detected in the washings, and dried in vacuo to yield 6.5 kg of a solid catalyst component in which 19 mg of titanium atom had been supported per g of solid catalyst component.

### (2) Persistence test for polymerization activity.

The persistence of polymerization activity was tested under the conditions similar to those in the first stage reaction zone of continuous two-stage polymerization described later in paragraph (3).

### (2)-(a)

Into a 50-liter stainless steel autoclave, which had been thoroughly flashed with nitrogen, were charged 12.5 kg of butane and 17 mmoles of triethylaluminum. To the mixture, which had been heated to 80°C, was added ethylene until the total pressure had reached 16 kg/cm², followed by hydrogen until the ethylene-to-hydrogen molar ratio had become 1/0.009. The polymerization was initiated by adding 296 mg of the solid catalyst component prepared in (1) above. The polymerization was allowed to continue for one hour at 80°C, while continuously feeding ethylene to keep the total pressure constant. The polymerization was then terminated with isopropyl alcohol. After releasing the butane and unreacted monomer, the polymer was dried in vacuo at 60°C. The yield of polymer was 2.34 kg corresponding to 7,910 g per g of the solid catalyst component.

### (2)-(b) to (e)

Polymerization was carried out under the same conditions as described in (2)-(a), except that the polymerization time was varied. The results obtained were as shown in Table 1. In the polymerization tests of (2)-(a) to (e), the ethylene-to-hydrogen ratio in the liquid phase was maintained at 1:0.009. By plotting the results of Table 1, a curve representing the relationship between the polymerization time and the yield of polymer per unit weight of the solid catalyst component was obtained as shown in Figure 1. From the curve, it is seen that the time $t_1$ required for the 15,000-fold polymer production based on the weight of solid catalyst component was 2.4 hours and the time $t_2$ required for the 20,000-fold polymer production was 3.8 hours. Therefore, the ratio $t_2/t_1$ was about 1.6.

6

(3) Continuous two-stage polymerization.

The continuous polymerization was carried out by using two loop-type reactors connected in series. Both reactors were always filled with the liquid phase so as to exclude substantially the gas phase. To the 250-liter first reactor, were continuously fed 53 kg/hour of butane, 74 mmole/hour of triethylaluminum, 1.2 g/hour of the solid catalyst component prepared above in (1), and 17 kg/hour of ethylene. Hydrogen was continuously fed so as to maintain the ethylene-to-hydrogen molar ratio in the liquid phase at 1:0.009. The temperature was 80°C and the total pressure was 38 kg/cm$^2$ · G. The polymer slurry was continuously transferred by the pressure difference from the first reactor to the second 500-liter reactor while feeding continuously to the second reactor 6.3 kg/hour of butane, 8.8 mmole/hour of triethylaluminum, and 22 kg/hour of ethylene. Hydrogen was continuously fed so as to keep the ethylene-to-hydrogen ratio (by mole) in the liquid phase at 1:0.12. The temperature was maintained at 80°C and the total pressure at 35 kg/cm$^2$ · G. The polymer slurry was continuously removed from the second reactor and the polymer was recovered and dried. The continuous polymerization was operated for 100 hours with satisfactory operational control. The polymer yield was 35 kg/hour which corresponded to an average polymer production of 29,200 g per g of solid catalyst component. The polymer production ratio of the first stage to the second stage was 40:60 by weight, as calculated from the material balance. The average polymer production per g of solid catalyst component in the first and second stage reaction zones was 11,700 g and 17,500 g, respectively. Properties of polymer: density, 0.961 g/cm$^3$; melt index, 0.29 g/10 min.; MFR, 104; bulk density, 0.45 g/cm$^3$.

The resulting polymer was extruded to form a tubular film of 10 μ thickness by the inflation process. The extrusion pressure was relatively low and the stability of the bubble was also excellent. The number of fish-eyes in the film was as low as 7 in 1,000 cm$^2$. The tensile strength, impact resistance and tear strength were satisfactory. The color shade and the appearance were both good.

TABLE 1

| Example No. | Polymerization time (hour) | Solid catalyst component (mg) | Yield of polymer (kg) | Polymer production (g polymer per g solid catalyst component) |
|---|---|---|---|---|
| 1-(2)-(a) | 1 | 296 | 2.34 | 7910 |
| 1-(2)-(b) | 2 | 249 | 3.21 | 12900 |
| 1-(2)-(c) | 3 | 225 | 3.89 | 17300 |
| 1-(2)-(d) | 4 | 212 | 4.34 | 20500 |
| 1-(2)-(e) | 5 | 179 | 4.21 | 23500 |

Example 2

(1) Persistence test for polymerization activity.

Using the solid catalyst component prepared in Example 1-(1), the persistence of polymerization activity was tested under the conditions similar to those in the first stage reaction zone of continuous two-stage polymerization described below in paragraph (2).

(1)-(a)

Into a 50-liter stainless steel autoclave, which had been thoroughly flashed with nitrogen, were charged 12.5 kg of butane, 290 g of butene-1 and 17 mmoles of triethylaluminum. To the mixture, which had been heated to 70°C, was added ethylene until the total pressure had reached 12.5 kg/cm$^2$ · G, followed by hydrogen until the ethylene-to-hydrogen ratio in the liquid phase had become 1:0.002 (molar ratio). The polymerization was initiated by adding 293 mg of the solid catalyst component prepared in Example 1-(1). The polymerization was allowed to continue for one hour at 70°C, while feeding ethylene continuously to keep the total pressure constant. The polymerization was then terminated with isopropyl alcohol. After releasing the butane and unreacted monomer, the polymer was dried in vacuo at 60°C. The yield of polymer was 2.22 kg, corresponding to 7,580 g per g of the solid catalyst component.

(1)-(b) to (e)

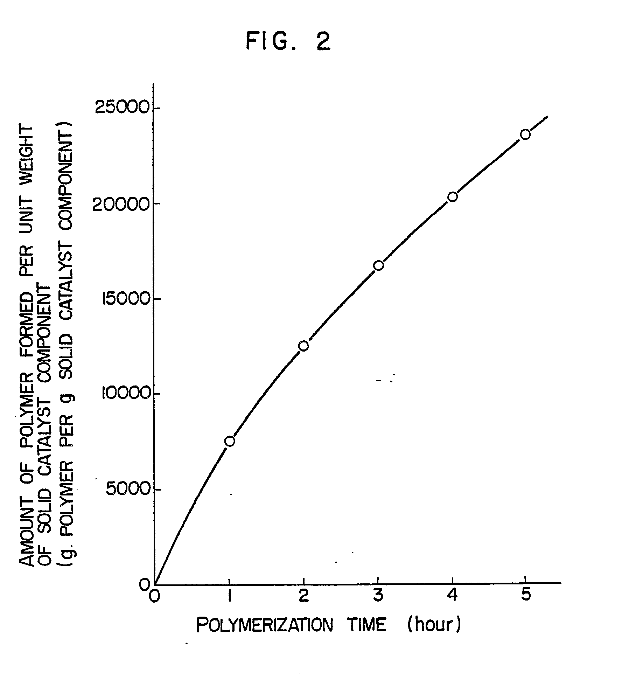

Polymerization was carried out under the same conditions as described above in (1)-(a). The results obtained were as shown in Table 2. In the polymerization tests of (1)-(a) to (e), the molar ratio of ethylene: butene-1:hydrogen in the liquid phase was maintained at 1:0.4:0.002. By plotting the results of Table 2, a

7

curve representing the relationship between the polymerization time and the yield of polymer per unit weight of the solid catalyst component was obtained as shown in Figure 2. From the curve, it is seen that the time $t_1$ required for the 15,000-fold polymer production based on the weight of solid catalyst component was 2.6 hours and the time $t_2$ required for the 20,000-fold polymer production was 3.9 hours. Therefore, the ratio $t_2/t_1$ was about 1.5.

(2) Continuous two-stage polymerization.

The continuous two-stage polymerization was carried out by using two loop-type reactors connected in series. Both reactors were kept full with the liquid phase so as to exclude substantially the gas phase. To the 250-liter first reactor, were continuously fed 51 kg/hour of butane, 73 mmoles/hour of triethylaluminum, 1.5 g/hour of the solid catalyst component prepared in Example 1-(1), and 19 kg/hour of ethylene. Butene-1 and hydrogen were continuously fed so as to maintain the molar ratio of ethylene:butene-1:hydrogen at 1:0.4:0.002. The temperature was maintained at 70°C and the total pressure at 38 kg/cm$^2$ · G. The polymer slurry was continuously transferred by the pressure difference to the second 500-liter reactor while feeding continuously to the second reactor 8.5 kg/hour of butane, 11 mmoles/hour of triethylaluminum and 20 kg/hour of ethylene. Butene-1 and hydrogen were continuously fed so as to keep the molar ratio of ethylene:butene-1:hydrogen in the liquid phase at 1:0.2:0.2. The temperature was maintained at 70°C and the total pressure at 35 kg/cm$^2$ · G. The polymer slurry was continuously removed from the second reactor and the polymer was recovered and dried. The continuous polymerization was operated for 100 hours with satisfactory operation control. The polymer yield was 35 kg/hour which corresponds to an average polymer production of 23,400 g per g of solid catalyst component. The polymer production ratio of the first stage to the second stage was 50:50 by weight, as calculated from the material balance. The average polymer production per g of solid catalyst component in the first and second stage reaction zones was 11,700 g and 11,700 g, respectively. Properties of polymer:density, 0.949 g/cm$^3$, melt index, 0.070 g/10 min.; MFR 150; bulk density, 0.45 g/cm$^3$.

The polymer was extruded to form a tubular film of 10 μ in thickness by the inflation process. The extrusion pressure was relatively low and the stability of the bubble was also excellent. The number of fish-eyes in the film was as low as 8 in 1,000 cm$^2$. The film properties such as tensile strength, impact resistance and tear strength were excellent. The color shade and the appearance were both good.

TABLE 2

| Example No. | Polymerization time (hour) | Solid catalyst component (mg) | Yield of polymer (kg) | Polymer production (g polymer per g solid catalyst component) |
|---|---|---|---|---|
| 2-(1)-(a) | 1 | 293 | 2.22 | 7580 |
| 2-(1)-(b) | 2 | 241 | 2.96 | 12300 |
| 2-(1)-(c) | 3 | 245 | 4.06 | 16600 |
| 2-(1)-(d) | 4 | 230 | 4.67 | 20300 |
| 2-(1)-(e) | 5 | 188 | 4.42 | 23500 |

Comparative Example 1

Continuous two-stage polymerization was carried out under the same conditions as in Example 2-(2), except that the average polymer production per unit weight of the solid catalyst component was increased in the first stage reaction zone by increasing the concentrations of ethylene, butene-1 and hydrogen.

The continuous polymerization was carried out by using two loop-type reactors connected in series. Each reactor was kept full with the liquid phase so as to exclude substantially the gas phase. To the 250-liter first reactor, were continuously fed 50 kg/hour of butane, 67 mmoles/hour of triethylaluminum, 1.0 g/hour of the solid catalyst component prepared in Example 1-(1), and 19 kg/hour of ethylene. Butene-1 and hydrogen were continuously fed so as to maintain the molar ratio of ethylene:butene-1:hydrogen in the liquid phase at 1:0.4:0.002. The temperature was maintained at 70°C and the total pressure at 38 kg/cm$^2$ · G. The concentrations of ethylene, butene-1 and hydrogen in the liquid phase were set at a level of 1.5 times that in the first reaction zone of Example 2-(2). The polymer slurry was continuously transferred by the pressure difference to the second 500-liter reactor while feeding continuously to the second reactor 7.7 kg/hour of butane, 10 mmoles/hour of triethylaluminum and 22 kg/hour of ethylene. At the same time, 0.55 g/hour of the solid catalyst component prepared in Example 1-(1) was continuously fed in order to establish

8

the same polymer production ratio (50:50) of the first stage to the second stage as that in Example 2-(2). Butene-1 and hydrogen were also fed continuously so as to maintain the molar ratio of ethylene:butene-1:hydrogen in the liquid phase at 1:0.2:0.2. The temperature was maintained at 70°C and the total pressure at 35 kg/cm$^2$ · G. The concentrations of ethylene, butene-1 and hydrogen in the liquid phase were the same as those in the second stage reaction zone of Example 2-(2). The polymer slurry was continuously withdrawn from the second reactor and the polymer was recovered and dried. The polymer yield was 35 kg/hour which corresponds to an average polymer production of 22,600 g per g of solid catalyst component. The polymer production ratio of the first stage to the second stage was 50:50 by weight, as calculated from the material balance. The average polymer production per g of solid catalyst component in the first stage reaction zone was 17,500 g. Properties of polymer:density, 0.950 g/cm$^3$; melt index, 0.073 g/10 min.; MFR, 147; bulk density:0.41 g/cm$^3$.

The polymer was extruded to form a tubular film of 10 μ in thickness by the inflation process. Although the extrusion pressure was relatively low, yet the stability of bubble was insufficient and the film revealed unevenness and a great many fish-eyes, making the film practically valueless.

From the results of the present Comparative Example, it is seen that if the average polymer production in the first stage exceeds 15,000 times the weight of solid catalyst component, it becomes necessary to supply to the second stage reaction zone an additional amount of the solid catalyst component to compensate the declined rate of polymerization and the resulting polymer becomes inferior in uniformity, leading to defective molded products.

Comparative Example 2
(1) Preparation of solid catalyst component.

Commercial anhydrous magnesium chloride was ground in a ball mill and heated at 300°C for 7 hours under reduced pressure. To 250 g of the magnesium chloride thus treated and placed in a 5-liter flask, was added 3 liters of n-heptane to form a suspension. To the suspension, were added dropwise at room temperature 426 ml of tetrahydrofuran and 750 ml of ethyl benzoate over a period of one hour. The mixture was heated to 50°C and stirred for 2 hours. The supernatant of the suspension was removed by filtration and the residue was thoroughly washed with n-heptane. After addition of 3 liters of titanium tetrachloride, the mixture was stirred at 100°C for one hour to allow the reaction to proceed. After completion of the reaction, the solid product was washed repeatedly with n-heptane until no more titanium tetrachloride had been detected in the washings, and then dried under reduced pressure to obtain a solid catalyst component which was found to have supported 58 mg of titanium atom per g of the solid catalyst component.

(2) Persistence test for polymerization activity.

The persistence of polymerization activity was tested under the same conditions as in Example 2-(1)-(a) to (e), except that the solid catalyst component prepared above in (1) was used. The time $t_1$ required for the 15,000-fold polymer production based on the weight of solid catalyst component was 6.6 hours, while the time $t_2$ required for the 20,000-fold polymer production was 16.5 hours. Therefore, the ratio $t_2/t_1$ was 2.5.

(3) Continuous two-stage polymerization.

Using two loop-type reactors connected in series, continuous two-stage polymerization was carried out under the same conditions as in Example 2-(2), except that the solid catalyst component prepared above in (1) was used. Both reactors were kept full with the liquid phase to exclude substantially the gas phase. To the first 250-liter reactor, were continuously fed 53 kg/hour of butane, 71 mmole/hour of triethylaluminum, 3.6 g/hour of the solid catalyst component prepared above in (1), and 17 kg/hour of ethylene. Butene-1 and hydrogen were continuously fed so as to maintain the molar ratio of ethylene:butene-1:hydrogen in the liquid phase at 1:0.4:0.002. The temperature was maintained at 70°C and the total pressure at 38 kg/cm$^2$ · G. The polymer slurry was continuously transferred by pressure difference from the first reactor to the second 500-liter reactor while feeding continuously to the second reactor 9.6 kg/hour of butane, 13 mmoles/hour of triethylaluminum, and 17 kg/hour of ethylene. At the same time, 2.0 g/hour of the solid catalyst component prepared above in (1) was continuously fed in order to establish the same polymer production ratio (50:50 by weight) of the first stage to the second stage as that in Example 2-(2). Butene-1 and hydrogen were also fed continuously so as to maintain the molar ratio of ethylene:butene-1:hydrogen in the liquid phase at 1:0.2:0.2. The temperature was maintained at 70°C and the total pressure at 35 kg/cm$^2$ · G. The polymer slurry was continuously withdrawn from the second reactor and the polymer was recovered and dried. The polymer yield was 30 kg/hour which corresponds to an average polymer production of 5,360 g per g of solid catalyst component. The polymer production ratio of the first stage to the second stage was 50:50 by weight, as calculated from the material balance. The average polymer production per g of solid catalyst component in the first stage reaction zone was 4,170 g. Properties of polymer:density, 0.951 g/cm$^3$; melt index, 0.080 g/10 min.; MFR, 143; bulk density, 0.30 g/cm$^3$.

The polymer was extruded to form a tubular film of 10 μ in thickness by the inflation process. Although the extrusion pressure was relatively low, yet the stability of bubble was insufficient and the film revealed unevenness and a great many fish-eyes making the film practically valueless.

From the results of the present Comparative Example, it is seen that if a solid catalyst component which does not meet the requirements as herein specified is used, it becomes necessary to supply to the second stage reaction zone an additional amount of the said catalyst component to compensate the declined rate of polymerization and the resulting polymer becomes inferior in uniformity, leading to defective molded products.

Example 3

(1) Preparation of solid catalyst component.

A solid catalyst component was prepared in a manner similar to that in Example 1-(1). It was found that 21 mg of titanium atom were supported per g of this solid catalyst component.

(2) Persistence test for polymerization activity.

The persistence of polymerization activity was tested under the conditions similar to those in the first stage reaction zone of continuous two-stage polymerization described below in (3).

(2)-(a)

Into a 50-liter stainless steel autoclave, which had been thoroughly flashed with nitrogen, were charged 10.0 kg of butane, 2.5 kg of butene-1, and 17 mmoles of triethylaluminum. To the mixture, which had been heated to 60°C, was added ethylene to a total pressure of 11.0 kg/cm$^2$ · G, followed by hydrogen until the ethylene-to-hydrogen molar ratio in the liquid phase had become 1:0.006. The ethylene-to-butene-1 molar ratio in the liquid phase was 1:4.3. The polymerization was initiated by adding 136 mg of the solid catalyst component prepared above in (1). The polymerization was allowed to continue for one hour at 60°C, while feeding ethylene continuously to keep the total pressure constant. The polymerization was then terminated with isopropyl alcohol. After releasing the butane and the unreacted monomers, the polymer was dried under reduced pressure at 60°C. The yield of polymer was 2.78 kg, corresponding to 20,400 g per g of the solid catalyst component.

(2)-(b) to (f)

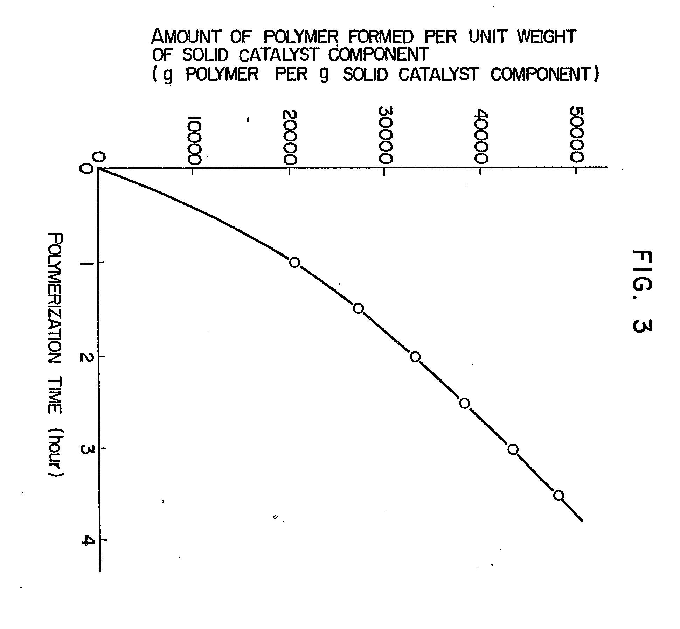

Polymerization was carried out under the same conditions as described above in (2)-(a), except that the polymerization time was varied. The results obtained were as shown in Table 3. In the polymerization tests of (2)-(a) to (f), the molar ratio of ethylene:butene-1:hydrogen in the liquid phase was maintained at 1:4.3:0.006. By plotting the results of Table 3, a curve representing the relationship between the polymerization time and the yield of polymer per unit weight of the solid catalyst component was obtained as shown in Figure 3. From the curve it is seen that the time $t_1$ required for the production of 30,000-fold polymer based on the weight of solid catalyst component was 1.7 hours, while the time $t_2$ required for the production of 40,000-fold polymer was 2.7 hours. Therefore, the ratio $t_2/t_1$ was about 1.6.

(3) Continuous two-stage polymerization.

The continuous two-stage polymerization was carried out by using two loop-type reactors connected in series. Both reactors were kept full with the liquid phase so as to exclude substantially the gas phase. To the first 250-liter reactor, were continuously fed 58 kg/hour of butane, 99 mmoles/hour of triethylaluminum, 900 mg/hour of the solid catalyst component prepared above in (1), and 21 kg/hour of ethylene. Butene-1 and hydrogen were continuously fed so as to maintain the molar ratio of ethylene:butene-1:hydrogen in the liquid phase at 1:4.3:0.006. The temperature was maintained at 60°C and the total pressure at 36 kg/cm$^2$ · G. The polymer slurry was continuously transferred by the pressure difference from the first reactor to the second 500-liter reactor while feeding continuously to the second reactor 14.5 kg/hour of butane, 26 mmoles/hour of triethylaluminum, and 32 kg/hour of ethylene. Butene-1 and hydrogen were also fed continuously so as to maintain the molar ratio of ethylene:butene-1:hydrogen in the liquid phase at 1:1.2:0.08. The temperature was maintained at 60°C and the total pressure at 33 kg/cm$^2$ · G. The polymer slurry was continuously withdrawn from the second reactor and the polymer was recovered and dried. The above polymerization operation was continued for 100 hours with satisfactory operational control. The polymer yield was 51 kg/hour corresponding to an average polymer production of 56,700 g per g of solid catalyst component. The polymer production ratio of the first stage to the second stage was 45:55 by weight, as calculated from the material balance. The average polymer production per g of solid catalyst component was 25,500 g in the first stage reaction zone and 31,200 g in the second stage reaction zone. Properties of polymer:density, 0.920 g/cm$^3$; melt index, 1.0 g/10 min.; MFR, 75; bulk density, 0.43 g/cm$^3$.

Physical properties of the press-molded sheet were very good as shown below.

Tensile impact strength: 295 kg-cm/cm$^2$ (ASTM D 1822)

Press conditions: ASTM D 1898 Method C

Test piece: S-type dumbbell; 1 mm thick.

Annealing: 1 hour in boiling water.

Test temperature: 20°C

Olsen stiffness: 2,600 kg/cm$^2$ (ASTM D 747)

Resistance to environmental stress-cracking:

$F_{50}$>1,000 hours (ASTM D 1693)

The polymer was molded by extrusion into pipe, 30 mm in diameter and 3 mm in wall thickness. The extrusion pressure was low. The molded product was desirable in appearance and excellent in physical properties such as impact resistance, environmental stress-cracking resistance, and the like.

TABLE 3

| Example No. | Polymerization time (hour) | Solid catalyst component (mg) | Yield of polymer (kg) | Polymer production (g polymer per g solid catalyst component) |
|---|---|---|---|---|
| 3-(2)-(a) | 1 | 136 | 2.78 | 20400 |
| 3-(2)-(b) | 1.5 | 115 | 3.12 | 27100 |
| 3-(2)-(c) | 2 | 101 | 3.31 | 32800 |
| 3-(2)-(d) | 2.5 | 112 | 4.27 | 38100 |
| 3-(2)-(e) | 3 | 106 | 4.59 | 43300 |
| 3-(2)-(f) | 3.5 | 89 | 4.28 | 48100 |

Comparative Example 3

Continuous two-stage polymerization was carried out in a manner similar to that in Example 3-(3), except that in the first stage reaction zone, the polymer production per unit weight of solid catalyst component was increased by increasing the concentrations of ethylene, butene-1 and hydrogen.

The continuous polymerization was carried out by using two loop-type reactors connected in series. Both reactors were kept full with the liquid phase so as to exclude substantially the gas phase. To the first 250-liter reactor, were continuously fed 51 kg/hour of butane, 97 mmoles/hour of triethylaluminum, 680 mg/hour of the solid catalyst component prepared in Example 3-(1), and 22 kg/hour of ethylene. Butene-1 and hydrogen were continuously fed so as to maintain the molar ratio of ethylene:butene-1:hydrogen in the liquid phase at 1:4.3:0.006. The temperature was maintained at 60°C and the total pressure at 36 kg/cm$^2$ · G. The concentrations of ethylene, butene-1 and hydrogen in the liquid phase were set at about 1.4 times those in the first reaction zone of Example 3-(3). The polymer slurry was continuously transferred by the pressure difference from the first reactor to the second 500-liter reactor, while feeding continuously to the second reactor 21 kg/hour of butane, 27 mmoles/hour of triethylaluminum, and 34 kg/hour of ethylene. At the same time, 370 mg/hour of the solid catalyst component prepared in Example 3-(1) was continuously fed in order to establish the same polymer production ratio (45:55 by weight) of the first stage to the second stage as that in Example 3-(3). Butene-1 and hydrogen were also fed continuously so as to maintain the molar ratio of ethylene:butene-1:hydrogen in the liquid phase at 1:1.2:0.08. The temperature was maintained at 60°C and the total pressure at 33 kg/cm$^2$ · G. The concentrations of ethylene, butene-1 and hydrogen in the liquid phase were the same as those in the second reaction zone of Example 3-(3). The polymer slurry was continuously removed from the second reactor and the polymer was recovered and dried. The polymer yield was 50 kg/hour corresponding to an average polymer production of 47,600 g per g of solid catalyst component. The polymer production ratio of the first stage to the second stage was 45:55 by weight, as calculated from the material balance. The average polymer production per g of solid catalyst component in the first stage reaction zone was 33,100 g. Properties of polymer:density, 0.921 g/cm$^3$; melt index, 1.0 g/10 minutes; MFR, 72; bulk density, 0.35 g/cm$^3$.

The press-molded sheet of the polymer was inferior in physical properties such as tensile-impact strength and resistance to environmental stress-cracking as shown below.

Tensile-impact strength: 123 kg-cm/cm$^2$
Olsen stiffness: 2640 kg/cm$^2$
Resistance to environmental stress-cracking: 530 hours (F$_{50}$)
The testing methods for these physical properties were the same as in Example 3-(3).

The resulting polymer was molded by extrusion into pipe, 30 mm in diameter and 3 mm in wall thickness. Although the processability was good, the molded product showed a great many fish-eyes and inferior appearance. The physical properties were also inferior in impact resistance and the like.

From the results of the present Comparative Example, it is seen that if the average polymer production per unit weight of the solid catalyst component in the first stage exceeds 30,000-fold, it becomes necessary to supply an additional amount of the solid catalyst component to the second stage reaction zone to

11

compensate the declined rate of polymerization and the uniformity of the polymer becomes inferior, leading to inferior molded products.

Comparative Example 4

(1) Persistence test for polymerization activity.

The persistence test for polymerization activity was performed in the same manner as in Example 3-(1)-(a) to (f), except that the solid catalyst component prepared in Comparative Example 2-(1) was used. The time $t_1$ required for the production of 30,000-fold polymer based on the weight of solid catalyst component was 3.8 hours, while the time $t_2$ required for the production of 40,000-fold polymer was 9.1 hours. Therefore, the ratio $t_2/t_1$ was about 2.4.

(2) Continuous two-stage polymerization.

Using two loop-type reactors connected in series and the solid catalyst component prepared above in Comparative Example 2-(1), a continuous two-stage polymerization was carried out under the same condition as similar to that of Example 3-(3). Both reactors were kept full with the liquid phase so as to exclude substantially the gas phase. To the first 250-liter reactor, were continuously charged 60 kg/hour of butane, 101 mmoles/hour of triethylaluminum, 1.3 g/hour of the solid catalyst component prepared above in (1), and 19 kg/hour of ethylene.

Butene-1 and hydrogen were continuously fed so as to maintain the molar ratio of ethylene:butene-1:hydrogen in the liquid phase at 1:4.3:0.006. The temperature and the total pressure were maintained at 60°C and 36 kg/cm$^2 \cdot$ G, respectively. The polymer slurry was continuously transferred by the pressure difference from the first reactor to the second 500-liter reactor while feeding continuously to the second reactor 16 kg/hour of butane, 27 mmoles/hour of triethylaluminum, and 29 kg/hour of ethylene. At the same time, 0.79 g/hour of the solid catalyst component prepared above in Comparative Example 2-(1) was continuously fed in order to establish the same polymer production ratio (45:55 by weight) of the first stage so the second stage as that in Example 3-(3). Butene-1 and hydrogen were also fed so as to maintain the molar ratio of ethylene:butene-1:hydrogen in the liquid phase at 1:1.2:0.08. The temperature and the total pressure were maintained at 60°C and 33 kg/cm$^2 \cdot$ G. The polymer slurry was continuously removed from the second reactor and the polymer was recovered and dried. The polymer yield was 44 kg/hour corresponding to an average polymer production of 21,100 g per g of solid catalyst component. The polymer production ratio of the first stage to the second stage was 45:55 by weight, as calculated from the material balance. The average polymer production per g of solid catalyst component in the first stage reaction zone was 15,200 g. Properties of polymer: density, 0.921 g/cm$^3$, melt index, 1.2 g/10 min.; MFR, 71; bulk density, 0.32 g/cm$^3$.

The press-molded sheet of the polymer was inferior in physical properties such as tensile-impact strength and resistance to environmental stress-cracking as shown below.

Tensile-impact strength: 105 kg-cm/cm$^2$

Olsen stiffness: 2,650 kg/cm$^2$

Resistance to environmental stress-cracking: 340 hours ($F_{50}$)

The testing methods for these physical properties were the same as in Example 3-(3).

The polymer was molded by extrusion into pipe, 30 mm in diameter and 3 mm in wall thickness. Although the processability was good, the molded product showed a great many fish-eyes and inferior appearance. The physical properties were also inferior in impact resistance and the like.

From the results of the present Comparative Example, it is seen that if a solid catalyst component which does not meet the requirements for the persistence of polymerization activity was used, it becomes necessary to supply an additional amount of the solid catalyst component to the second stage reaction zone to compensate the declined rate of polymerization and the uniformity of the polymer becomes inferior, leading to inferior molded products.

Example 4

(1) Persistence test for polymerization activity.

Using the solid catalyst component prepared in Example 3-(1), the persistence test for polymerization activity was performed under the conditions similar to those in the first stage reaction zone of the continuous two-stage polymerization described below in (2).

(1)-(a)

Into a 50-liter stainless steel autoclave, which had been thoroughly flashed with nitrogen, were charged 11.8 kg of butane, 0.70 kg of butene-1, and 17 mmoles of triethylaluminum. To the mixture, which had been heated to 60°C, was added ethylene to the total pressure of 10.5 kg/cm$^2 \cdot$ G, followed by hydrogen until the ethylene-to-hydrogen molar ratio in the liquid phase had become 1:0.007. The ethylene-to-butene-1 molar ratio in the liquid phase was 1:1.2. The polymerization was initiated by adding 152 mg of the solid catalyst component prepared in Example 3-(1). The polymerization was allowed to continue for one hour at 60°C, while feeding ethylene continuously to keep the total pressure constant. The polymerization was then terminated with isopropyl alcohol. After releasing the butane and unreacted monomers, the polymer was dried in vacuo at 60°C. The yield of polymer was 2.84 kg, corresponding to 18,700 g per g of the solid catalyst component.

(1)-(b) to (g)

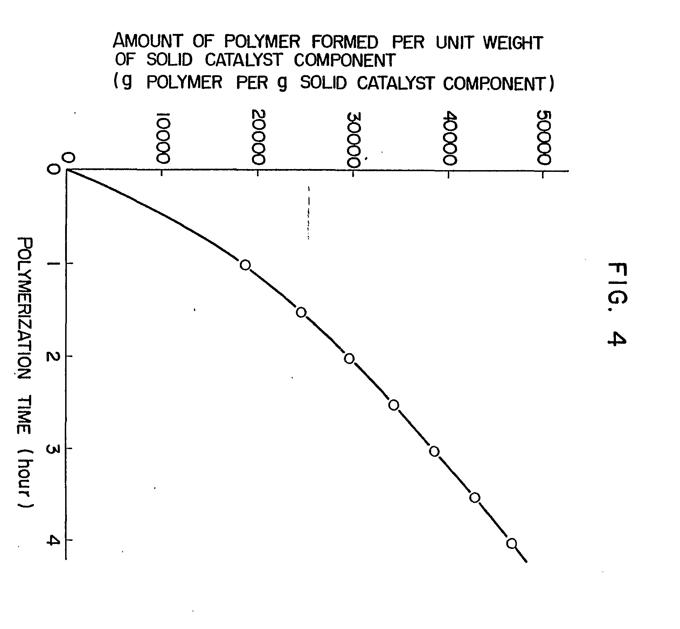

Polymerization was carried out under the same conditions as described above in (1)-(a). The results obtained were as shown in Table 4. In the polymerization tests of (1)-(a) to (g), the molar ratio of ethylene:butene-1:hydrogen in the liquid phase was maintained at 1:1.2:0.007. By plotting the results of Table 4, a curve representing the relationship between the polymerization time and the yield of polymer per unit weight of the solid catalyst component was obtained as shown in Figure 4. From the curve, it is seen that the time $t_1$ required for the 30,000-fold polymer production based on the weight of solid catalyst component was 2.0 hours and the time $t_2$ required for the 40,000-fold polymer production was 3.2 hours. Therefore, the ratio $t_2/t_1$ was about 1.6.

(2) Continuous two-stage polymerization.

The continuous two-stage polymerization was carried out by using two loop-type reactors connected in series. Both reactors were kept full with the liquid phase so as to exclude substantially the gas phase. To the first 250-liter reactor, were continuously fed 63 kg/hour of butane, 82 mmoles/hour of triethylaluminum, 1.0 g/hour of the solid catalyst component prepared in Example 3-(1), and 26 kg/hour of ethylene. Butene-1 and hydrogen were continuously fed so as to keep the molar ratio of ethylene:butene-1:hydrogen in the liquid phase at 1:1.2:0.007. The temperature and the total pressure were maintained at 60°C and 41 kg/cm$^2 \cdot$ G, respectively. The polymer slurry was continuously transferred by the pressure difference from the first reactor to the second 500-liter reactor, while feeding continuously to the second reactor 10 kg/hour of butane, 13 mmoles/hour of triethylaluminum, and 34 kg/hour of ethylene. Butene-1 and hydrogen were also continuously fed so as to keep the molar ratio of ethylene:butene-1:hydrogen in the liquid phase at 1:0.35:0.12. The temperature and the total pressure were maintained at 60°C and 41 kg/cm$^2 \cdot$ G, respectively. The polymer slurry was continuously withdrawn from the second reactor and the polymer was recovered and dried. The continuous polymerization was allowed to continue for 100 hours with satisfactory operation control. The polymer yield was 44 kg/hour corresponding to an average polymer production of 44,000 g per g of solid catalyst component. The polymer production ratio of the first stage to the second stage was 50:50 by weight, as calculated from the material balance. The average polymer production per g of solid catalyst component in the first and second stage was both 22,000 g. Properties of polymer:density, 0.938 g/cm$^3$; melt index, 0.20 g/10 min.; MFR, 90; bulk density, 0.47 g/cm$^3$.

By using a crosshead circular die, the polymer obtained above was coated on a steel pipe, 12 inches in outer diameter, to a thickness of 3 mm. The coating operation was very smooth and the coating layer was excellent in low-temperature resistance, impact resistance, and resistance to environmental stress-cracking.

TABLE 4

| Example No. | Polymerization time (hour) | Solid catalyst component (mg) | Yield of polymer (kg) | Polymer productivity (g polymer per g solid catalyst component) |
|---|---|---|---|---|
| 4-(1)-(a) | 1 | 152 | 2.84 | 18700 |
| 4-(1)-(b) | 1.5 | 133 | 3.27 | 24600 |
| 4-(1)-(c) | 2 | 115 | 3.43 | 29800 |
| 4-(1)-(d) | 2.5 | 120 | 4.11 | 34300 |
| 4-(1)-(e) | 3 | 110 | 4.23 | 38500 |
| 4-(1)-(f) | 3.5 | 94 | 4.03 | 42900 |
| 4-(1)-(g) | 4 | 93 | 4.34 | 46700 |

**Claims**

1. A process for producing an ethylene polymer of broad molecular weight distribution by the slurry-type polymerization of ethylene or ethylene and other olefins by using a catalyst system comprising a high-activity supported-type Ziegler catalyst component (hereinafter referred to as solid catalyst component) and an organometallic compound component and hydrogen as molecular weight regulator in two or more reaction zones connected in series and kept full with the liquid phase to substantially exclude the gas phase, which comprises

(i) using (a) a solid catalyst component defined by the formula

$$t_2/t_1 < 2$$

(where $t_1$ and $t_2$ are the time required to produce an ethylene polymer amounting, respectively, to 30,000 and 40,000 times the weight of solid catalyst component in a polymerization test performed under the same conditions as in the first stage reaction zone of multistage polymerization) for obtaining the ethylene polymer having a density below 0.945 g/cm³, or (b) a solid catalyst component defined by the formula

$$t_2/t_1 < 2$$

(where $t_1$ and $t_2$ are the time required to produce an ethylene polymer amounting, respectively, to 15,000 and 20,000 times the weight of solid catalyst component in a polymerization test performed under the same conditions as in the first stage reaction zone of multistage polymerization) for obtaining the ethylene polymer having a density of 0.945 g/cm³ or above;

(ii) feeding the catalyst system continuously to the first stage reaction zone, allowing the polymerization to proceed under application of pressure in the presence or absence of hydrogen to produce higher molecular-weight polymer particles, withdrawing continuously the resulting polymer slurry, transferring the slurry to the second stage reaction zone where the polymerization is further continued under the conditions of hydrogen-to-ethylene ratio larger than that in the first stage reaction zone to produce a polymer having a molecular weight lower than that of the polymer formed in the first stage; if necessary, continuing the polymerization in a similar manner in the third and following stages;

(iii) keeping the average amount of polymer produced in each stage, except for the final stage, (a) below 30,000 times the weight of solid catalyst component, for obtaining a polymer having a density below 0.945 g/cm³, or (b) at or below 15,000 times the weight of solid catalyst component, for obtaining a polymer having a density of 0.945 g/cm³ or above; and

(iv) selecting the amount of polymer formation in each stage so as to keep the average amount of polymer produced after completion of the multistage polymerization at 5,000 times the weight of solid catalyst component or more.

2. A process according to Claim 1, wherein the first stage reactor is a loop reactor.

3. A process according to Claim 1, wherein the second stage reactor is a loop reactor.

4. A process according to Claim 1, wherein the solid catalyst component satisfies the formula $t_2/t_1 < 1.7$ (where $t_1$ and $t_2$ are as defined above).

5. A process according to Claim 1, wherein the amount of polymer formed in the first stage reaction zone is 5 to 80% by weight of the total polymer.

6. A process according to Claim 1, wherein other olefin is propylene, butene-1, pentene-1, hexene-1, octene-1, or 4-methylpentene-1.

7. A process according to Claim 1, wherein the amount of copolymerized olefin in the copolymer is 15 mole-% or less.

8. A process according to Claim 1, wherein the polymerization temperature is from room temperature to 120°C.

9. A process according to Claim 1, wherein the polymerization pressure is 1 to 100 kg/cm².

10. A process according to Claim 1, wherein the carrier of the solid catalyst component is magnesium oxide, titanium oxide, silica, alumina, magnesium carbonate, hydroxychloride of a divalent metal, magnesium hydroxide, magnesium chloride, magnesium alkoxide, magnesium haloalkoxide, a double oxide of magnesium and aluminum, or a double oxide of magnesium and calcium.

11. A process according to Claim 1, wherein the transition metal compound supported on the carrier of the solid catalyst component is titanium tetrachloride, titanium tetrabromide, titanium tetraiodide, titanium trichloride; an alkoxytitanium compound, aryloxytitanium compound, alkoxytitanium halide compound, or aryloxytitanium halide compound represented by the general formula $Ti(OR^1)_{4-p}X_p$ (wherein $R^1$ is a hydrocarbon group, X is a halogen atom, and p is a number satisfying the relation $0 \leq p < 4$); vanadium tetrachloride, vanadium oxytrichloride, zirconium tetrachloride; an alkoxyzirconium compound, aryloxyzirconium compound, alkoxyzirconium halide compound, or aryloxyzirconium halide compound represented by the general formula $Zr(OR^2)_{4-q}X_q$ (where $R^2$ is a hydrocarbon group, X is a halogen atom, and q is a number satisfying the relation $0 \leq q < 4$).

12. A process according to Claim 1, wherein the solid catalyst component is a reaction product of an organomagnesium compound and a transition metal compound selected from titanium tetrahalides, alkoxytitanium compounds, aryloxytitanium compounds, alkoxytitanium halide compounds, and aryloxytitanium halide compounds represented by the general formula $Ti(OR^3)_{4-r}X_r$, wherein $R^3$ is a hydrocarbon group, X is a halogen atom, and r is a number defined by the formula $O \leqq r \leqq 4$.

## Patentansprüche

1. Verfahren zur Herstellung eines Äthylen-Polymerisates mit breiter Molekulargewichtsverteilung durch aufschlämmungsartige Polymerisation von Äthylen oder Äthylen und anderen Olefinen unter Verwendung eines Katalysator-Systems aus einer hochreaktiven Ziegler-Träger-Katalysator-Komponente (nachstehend als feste Katalysator-Komponente bezeichnet) und einer Organometall-Verbindungs-Komponente und Wasserstoff als Molekulargewichtsregler in zwei oder mehr in Reihe geschalteten und zum wesentlichen Ausschluß der Gasphase mit der flüssigen Phase gefüllten Reaktionszonen, umfassend

(i) die Verwendung (a) einer festen Katalysator-Komponente, die durch die Formel

$$t_2 / t_2 < 2$$

definiert ist (in der $t_1$ und $t_2$ die Zeiten sind, die erforderlich sind zur Erzeugung eines Äthylen-Polymerisates in einer Menge vom 30.000- bis 40.000-fachen des Gewichts der festen Katalysator-Komponente in einem Polymerisations-Test, der unter den gleichen Bedingungen wie in der Reaktionszone der ersten Stufe einer mehrstufigen Polymerisation durchgeführt wird), wobei ein Äthylen-Polymerisat mit einer Dichte unter 0,945 g/cm³ erhalten wird, oder (b) einer festen Katalysator-Komponente, die durch die Formel

$$t_2 / t_1 < 2$$

definiert ist (in der $t_1$ und $t_2$ die Zeiten sind, die erforderlich sind zur Erzeugung eines Äthylen-Polymerisates in einer Menge vom 15.000- bzw. 20.000-fachen des Gewichts der festen Katalysator-Komponente in einem Polymerisations-Test, der unter den gleichen Bedingungen wie in der Reaktionszone der ersten Stufe einer mehrstufigen Polymerisation durchgeführt wird), um ein Äthylen-Polymerisat mit einer Dichte von 0,945 g/cm³ oder darüber zu erhalten;

(ii) kontinuierliche Zuführung des Katalysator-Systems zur Reaktionszone der ersten Stufe, wobei die Polymerisation unter Anlegung von Druck in Gegenwart oder Abwesenheit von Wasserstoff zur Erzeugung von Polymerisatteilchen mit höherem Molekulargewicht fortschreiten gelassen wird, kontinuierliche Entnahme der erhaltenen Polymerisat-Aufschlämmung, Überführung der Aufschlämmung in die Reaktionszone der zweiten Stufe, in der die Polymerisation unter den Bedingungen fortgesetzt wird, daß das Verhältnis Wasserstoff zu Äthylen größer ist als in der Reaktionszone der ersten Stufe, wobei ein Polymerisat mit einem Molekulargewicht erzeugt wird, das niedriger ist als dasjenige des in der ersten Stufe erzeugten Polymerisats, und erforderlichenfalls Fortsetzung der Polymerisation in ähnlicher Weise in der dritten und den folgenden Stufen;

(iii) Halten der durchschnittlichen Menge des in jeder Stufe mit Ausnahme der Endstufe erzeugten Polymerisates

(a) unter dem 30.000-fachen des Gewichts der festen Katalysator-Komponente, falls ein Polymerisat mit einer Dichte unter 0,945 g/cm³ erhalten werden soll, oder

(b) beim oder unter dem 15.000-fachen des Gewichts der festen Katalysator-Komponente, falls ein Polymerisat mit einer Dichte von 0,945 g/cm³ oder darüber erhalten werden soll, und

(iv) Auswahl der Menge des erzeugten Polymerisates in jeder Stufe derart, daß die durchschnittliche Menge des nach Abschluß der mehrstufigen Polymerisation erzeugten Polymerisates beim 5000-fachen des Gewichtes der festen Katalysator-Komponente oder darüber liegt.

2. Verfahren nach Anspruch 1, wobei der Reaktor der ersten Stufe ein Schleifenreaktor ist.

3. Verfahren nach Anspruch 1, wobei der Reaktor der zweiten Stufe ein Schleifenreaktor ist.

4. Verfahren nach Anspruch 1, wobei die feste Katalysator-Komponente die Formel $t_2 / t_1 < 1,7$ erfüllt (in der $t_1$ und $t_2$ wie vorstehend definiert sind).

5. Verfahren nach Anspruch 1, wobei die in der Reaktionszone der ersten Stufe erzeugte Polymerisatmenge 5 bis 80 Gewichtsprozent des gesamten Polymerisates darstellt.

6. Verfahren nach Anspruch 1, wobei das andere Olefin Propylen, Buten-1, Penten-1, Hexen-1, Octen-1 oder 4-Methylpenten-1 ist.

7. Verfahren nach Anspruch 1, wobei die Menge des copolymerisierten Olefins im Copolymerisat höchstens 15 Mol-% beträgt.

8. Verfahren nach Anspruch 1, wobei die Polymerisations-Temperatur von Raumtemperatur bis 120°C reicht.

9. Verfahren nach Anspruch 1, wobei der Polymerisationsdruck 1 bis 100 kg/cm² beträgt.

10. Verfahren nach Anspruch 1, wobei der Träger der festen Katalysator-Komponente Magnesiumoxid, Titanoxid, Siliziumdioxid, Aluminiumoxid, Magnesiumcarbonat, ein Hydroxychlorid eines zweiwertigen

**0 057 420**

Metalls, Magnesiumhydroxid, Magnesiumchlorid, Magnesiumalkoxid, Magnesiumhalogenalkoxid, ein Doppeloxid von Magnesium und Aluminium oder ein Doppeloxid von Magnesium und Calcium ist.

11. Verfahren nach Anspruch 1, wobei die auf dem Träger der festen Katalysator-Komponente aufgebrachte Übergangsmetall-Verbindung Titantetrachlorid, Titantetrabromid, Titantetrajodid, Titantrichlorid, eine Alkoxytitan-Verbindung, Aryloxytitan-Verbindung, Alkoxytitanhalogenid-Verbindung oder Aryloxytitanhalogenid-Verbindung der allgemeinen Formel $Ti(OR^1)_{4-p}X_p$ (in der $R^1$ einen Kohlenwasserstoffrest bedeutet, X ein Halogenatom darstellt und p eine die Gleichung $O \leqq p < 4$ erfüllende Zahl ist), Vanadiumtetrachlorid, Vanadiumoxytrichlorid, Zirconiumtetrachlorid, eine Alkoxyzirconium-Verbindung, Aryloxyzirconium-Verbindung, Alkoxyzirconiumhalogenid-Verbindung oder Aryloxyzirconiumhalogenid-Verbindung der allgemeinen Formel $Zr(OR^2)_{4-q}X_q$ (in der $R^2$ einen Kohlenwasserstoffrest bedeutet, X ein Halogenatom darstellt und q eine die Gleichung $O \leqq q < 4$ erfüllende Zahl ist) bedeutet.

12. Verfahren nach Anspruch 1, wobei die feste Katalysator-Komponente ein Umsetzungsprodukt aus einer Organomagnesium-Verbindung und einer Übergangsmetall-Verbindung, ausgewählt aus Titantetrahalogeniden, Alkoxytitan-Verbindungen, Aryloxytitan-Verbindungen, Alkoxytitanhalogenid-Verbindungen und Aryloxytitanhalogenid-Verbindungen der allgemeinen Formel $Ti(OR^3)_{4-r}X_4$ ist, in der $R^3$ einen Kohlenwasserstoffrest bedeutet, X ein Halogenatom darstellt und r eine durch die Formel $O \leqq r \leqq 4$ definierte Zahl ist.

**Revendications**

1. Procédé de production d'un polymère d'éthylène présentant une large distribution de poids moléculaire, par la polymérisation du type en bouillie d'éthylène ou d'éthylène et d'autres oléfines avec utilisation d'un système catalyseur comprenant un composant catalyseur de Ziegler d'activité élevée, du type fixé sur support (ci-après appelé composant solide de catalyseur) et un composant organométallique, ainsi que de l'hydrogène servant de régulateur de poids moléculaire, dans deux ou plusieurs zones de réaction reliées en série et maintenues pleines de la phase liquide afin d'en exclure pratiquement la phase gazeuse, ce procédé comprenant les opérations consistant:

(i) à utiliser (a) un composant solide de catalyseur défini par la formule

$$t_2/t_1 < 2$$

(dans laquelle $t_1$ et $t_2$ sont les temps nécessaires pour produire des quantités de polymère d'éthylène s'élevant respectivement à 30 000 et 40 000 fois le poids de composant solide de catalyseur dans un essai de polymérisation effectué dans les mêmes conditions que dans la zone de réaction du premier stade d'une polymérisation en plusieurs stades) pour obtenir un polymère d'éthylène ayant une densité inférieure à 0,945 $g/cm^3$, ou (b) un composant solide de catalyseur défini par la formule

$$t_2/t_1 < 2$$

(dans laquelle $t_1$ et $t_2$ sont les temps nécessaires pour produire des quantités de polymère d'éthylène s'élevant respectivement à 15 000 et 20 000 fois le poids de composant solide de catalyseur dans un essai de polymérisation effectué dans les mêmes conditions que dans la zone de réaction du premier stade d'une polymérisation en plusieurs stades) pour obtenir un polymère d'éthylène ayant une densité égale ou supérieure à 0,945 $g/cm^3$;

(ii) à introduire le système catalyseur en continu dans la zone de réaction du premier stade, à laisser la polymérisation se développer avec application de pression, en présence ou en l'absence d'hydrogène, pour produire des particules de polymère de poids moléculaire plus élevé, à extraire en continu la bouillie de polymère résultante, à transférer la bouillie dans la zone de réaction du second stade, où la polymérisation est poursuivie dans les conditions d'un rapport hydrogène/éthylène plus élevé que dans la zone de réaction du premier stade, pour produire un polymère ayant un poids moléculaire plus bas que celui du polymère ayant un poids moléculaire plus bas que celui du polymère formé dans le premier stade et, si nécessaire, à poursuivre la polymérisation de manière similaire dans le troisième stade et les stades suivants;

(iii) à maintenir la quantité moyenne de polymère produit dans chaque stade, à l'exception du stade final, (a) au-dessous de 30 000 fois le poids de composant solide de catalyseur pour obtenir un polymère ayant une densité inférieure à 0,945 $g/cm^3$, ou (b) à ou au-dessous de 15 000 fois le poids de composant solide de catalyseur pour obtenir un polymère ayant une densité de 0,945 $g/cm^3$ ou plus; et

(iv) à choisir la quantité de formation de polymère dans chaque stade de manière à maintenir la quantité moyenne de polymère produit après l'achèvement de la polymérisation en plusieurs stades à 5000 fois le poids de composant solide de catalyseur ou plus.

2. Procédé selon la revendication 1, dans lequel le réacteur du premier stade est un réacteur en boucle.

3. Procédé selon la revendication 1, dans lequel le réacteur du second stade est un réacteur en boucle.

16

**0 057 420**

4. Procédé selon la revendication 1, dans lequel le composant solide de catalyseur satisfait la formule $t_2/t_1 < 1,7$ (dans laquelle $t_1$ et $t_2$ ont les significations données ci-dessus).

5. Procédé selon la revendication 1, dans lequel la quantité de polymère formé dans la zone de réaction du premier stade est comprise entre 5 et 80% en poids du polymère total.

6. Procédé selon la revendication 1, dans lequel l'autre oléfine est le propylène, le butène-1, le pentène-1, l'hexène-1, l'octène-1 ou le 4-méthylpentène-1.

7. Procédé selon la revendication 1, dans lequel la quantité d'oléfine copolymérisée dans le copolymère est de 15 mol% ou moins.

8. Procédé selon la revendication 1, dans lequel la température de polymérisation est comprise entre la température ambiante et 120°C.

9. Procédé selon la revendication 1, dans lequel la pression de polymérisation est comprise entre 1 et 100 kg/cm².

10. Procédé selon la revendication 1, dans lequel le support du composant solide de catalyseur est l'oxyde de magnésium, l'oxyde de titane, la silice, l'alumine, le carbonate de magnésium, un hydroxychlorure d'un métal bivalent, l'hydroxyde de magnésium, le chlorure de magnésium, un alcoxyde de magnésium, un alcoxyde halogéné de magnésium, un oxyde double de magnésium et d'aluminium ou un oxyde double de magnésium et de calcium.

11. Procédé selon la revendication 1, dans lequel le composé de métal de transition fixé sur le support du composant solide de catalyseur est le tétrachlorure de titane, le tétrabromure de titane, le tétraiodure de titane, le trichlorure de titane, un composé alcoxytitanique, un composé aryloxytitanique, un composé halogénure d'alcoxytitane ou un composé halogénure d'aryloxytitane représenté par la formule générale $Ti(OR^1)_{4-p}X_p$ (dans laquelle $R^1$ est un groupe hydrocarboné, X est un atome d'halogène et p est un nombre satisfaisant la relation $O \leq p \leq 4$); le tétrachlorure de vanadium, l'oxytrichlorure de vanadium, le tétrachlorure de zirconium, un composé d'alcoxyzirconium, un composé d'aryloxyzirconium, un composé halogénure d'alcoxyzirconium ou un composé halogénure d'aryloxyzirconium représenté par la formule générale $Zr(OR^2)_{4-q}X_q$ (dans laquelle $R^2$ est un groupe hydrocarboné, X est un atome d'halogène et q est un nombre satisfaisant la relation $O \leq q \leq 4$).

12. Procédé selon la revendication 1, dans lequel le composant solide de catalyseur est un produit de réaction d'un composé organomagnésien et d'un composé de métal de transition choisi parmi des tétrahalogénures de titane, des composés alcoxytitaniques, des composés aryloxytitaniques, des composés halogénures d'alcoxytitane et des composés halogénures d'aryloxytitane représentés par la formule générale $Ti(OR^3)_{4-r}X_r$, dans laquelle $R^3$ est un groupe hydrocarboné, X est un atome d'halogène et r est un nombre défini par la formule $O \leq r \leq 4$.

17

## FIG. 1

FIG. 2

0 057 420

0 057 420

FIG. 3

FIG. 3

3

0 057 420

FIG. 4